# EUROPEAN PATENT SPECIFICATION

(11) **EP 4 123 858 B1**
(45) Date of publication and mention of the grant of the patent: **12.07.2023**
(21) Application number: 21187492.0
(22) Date of filing: 23.07.2021
(51) Int. Cl.: H02H 3/05, H02H 3/087, H02H 3/093, H02H 7/18

(54) **BATTERY MANAGEMENT SYSTEM AND METHOD FOR MONITORING OVERCURRENT IN A BATTERY MANAGEMENT SYSTEM**
BATTERIEVERWALTUNGSSYSTEM UND VERFAHREN ZUR ÜBERWACHUNG VON ÜBERSTROM IN EINEM BATTERIEVERWALTUNGSSYSTEM
SYSTÈME DE GESTION DE BATTERIE ET PROCÉDÉ DE SURVEILLANCE DE SURINTENSITÉ DANS UN SYSTÈME DE GESTION DE BATTERIE

(43) Date of publication of application: 25.01.2023
(73) Proprietor: Munich Electrification GmbH, 81373 Munich (DE)
(72) Inventor: Goede, Stefan, 80799 München (DE); Kleppe, Sebastian, 80637 München (DE); Reichmeyer, Konstantin, 81371 München (DE)
(74) Representative: Grünecker Patent- und Rechtsanwälte PartG mbB

(56) References cited:
- DE-A1-102013 222 392
- US-A1- 2007 103 831
- US-A1- 2021 013 708

## Description

The present invention relates to a battery management system, and a method for monitoring overcurrent of an energy storage system with a battery management system.

In battery packs in electric vehicles, overcurrent and short circuits are safety critical events, which need to be managed. For this purpose, the use of contactor devices for connecting and disconnecting electronic circuits in an energy storage system, is known state of the art. With the advanced development of electric vehicles (EV) or hybrid electric vehicles (HEV), like a bus, a truck or a passenger car, high voltage energy storage systems become more and more common in vehicles. As such high voltage systems nowadays are typically capable of supplying high voltages in a range between 400 V and 1 kV and may be even capable of supplying higher voltages in future applications, these high voltage energy storage systems present a greater shock hazard than traditional powertrains. Accordingly, the prevention of safety hazards and overcurrent protection is of utmost importance for these systems. For example, it is important to ensure the safety of the vehicle's passengers, of roadside assistance or of maintenance workers, in cases of malfunctions of the high voltage energy storage system or of an accident of the vehicle, which affects the electronic circuits of the energy storage system.

It is known in conventional systems, that a short circuit can be covered by a melting fuse, which melts, when the current flowing in the energy storage system exceeds a certain current value for a specific duration. Also new overcurrent protection devices, such as pyro fuses are becoming more and more widely used. Such pyro fuses are usually activated by actuating a pyroelectric squib, for example in case of an accident of the vehicle, which then for example severs a busbar being mounted in the supply line of the energy storage system.

Accordingly, a pyro fuse can disconnect short circuit currents or overcurrents in the energy storage system, if a control system actuates the pyrotechnical squib within a defined time, which may be for example smaller than 1 ms.

Furthermore, there are other overcurrent protection devices, which are electro-mechanical contactors having a contactor coil and a movable busbar inside. Such electro-mechanical devices can disconnect high currents at high voltage, if the contactor coil is deenergized quickly, for example within a time equal to or smaller than 150 µs after detection of a malfunction in the high voltage energy storage system.

US 2021/013708 A1 discloses a pyro-fuse control system having a current sensing circuit and a diagnostic circuit coupled to the current sensing circuit. The current sensing circuit is configured to determine whether the current flowing in a conductor exceeds a threshold current. The diagnostic circuit is configured to determine whether an indication of current exceeding the threshold current generated by the current sensing circuit is caused by current flowing through the conductor and is not caused by a fault in the current sensing circuit.

DE 10 2013 222 392 A1 discloses a battery system arranged to exchange current having a current intensity with its environment. The battery system comprises at least one electrochemical cell and two similar current measuring devices, each of which is capable of detecting the current intensity of the current, and at least one digital transmitting device.

Accordingly, it is an object of the present invention to enable quick detection of a short circuit or overcurrent and to quickly trigger an overcurrent protection device for interrupting the charging or discharging of the battery in order to provide a short circuit protection. Furthermore, it is also an object to provide high degree of functional integration of current measurement and overcurrent protection in a battery management system in order to provide a simple and economic solution. The invention is defined in the appended independent claims. Advantageous embodiments of the invention are the subject matter of the dependent claims.

In particular, the present invention provides a battery management system comprising a first terminal for electrically connecting one terminal of a battery, a second terminal for electrically connecting at least one of an electric load or a charger, an overcurrent protection device conductively coupled between the first terminal and the second terminal, and configured to interrupt charging or discharging of the battery, an overcurrent protection device controller configured to trigger the overcurrent protection device, so as to interrupt charging or discharging of the battery, and a current sensor conductively coupled between the first terminal and the second terminal. A measurement circuit is configured to measure a first measurement voltage and a second measurement voltage across the current sensor, wherein the first measurement voltage and the second measurement voltage are proportional to a battery current flowing between the first terminal and the second terminal, and to output a first overcurrent triggering signal, if the first measurement voltage exceeds a predetermined overcurrent value for a predetermined time interval, and to output a second overcurrent triggering signal, if the second measurement voltage exceeds a second predetermined overcurrent value for the predetermined time interval, and a first processing circuit is configured to monitor whether the first overcurrent triggering signal and/or the second overcurrent triggering signal is output by the measurement circuit, and configured to control the overcurrent protection device controller to trigger the overcurrent protection device based on the detection of at least one of the first overcurrent triggering signal and the second overcurrent triggering signal.

In this manner, the present invention can achieve a high degree of functional integration of the current detection and the overcurrent trigger in a battery management system, wherein a safe and rapid detection of battery overcurrent or other malfunctions in an energy storage system and a rapid stopping of the overcurrent or short circuit can be achieved. Hereby, the present invention provides a detection accuracy and detection response to an overcurrent according to the requirements of Automotive Safety Integrity Level (ASIL) D as defined in the standard DIN ISO 26262:2018 - Functional Safety for Road Vehicles. Furthermore, the present invention provides a fully redundant and independent measurement and detection path for the overcurrent, so that a single point fault in the current sensor and in the measurement circuit can be compensated.

Hereby, the overcurrent protection device can be for example a pyrofuse, which is triggered to interrupt charging or discharging of the battery by firing a pyro charge, or a contactor, which is triggered to interrupt charging or discharging of the battery by deenergizing a contactor coil. According to a preferred embodiment, the first processing circuit is configured to output to the overcurrent protection device controller a first interruption control signal and a second interruption control signal, when at least one of the first overcurrent protection signal and the second overcurrent protection signal is output by the measurement circuit, wherein the overcurrent protection device controller is configured to trigger the overcurrent protection device in response to detecting the first interruption control signal and the second interruption control signal.

In this manner, it can be ensured that the first processing circuit does not rely on a single measurement value provided by the measurement circuit. Furthermore, single point faults in the transmission of the control signals from the first processing circuit to the overcurrent protection device controller do not result in an unwanted triggering of the overcurrent protection device. Accordingly, the reliability of the overcurrent protection can be further enhanced.

In order to achieve high independence of the two overcurrent measurements of the battery management system, the current sensor can comprise a first resistance section comprising a resistive material having a first specific electrical conductivity and a first temperature coefficient, and a second resistance section comprising a second resistive material having a second specific electrical conductivity and a second temperature coefficient, wherein the measurement circuit is configured to measure the first measurement voltage across the first resistance section and to measure the second measurement voltage across the second resistance section.

Hereby, the current sensor is advantageously formed as a dual shunt resistor, wherein the first resistance section and the second resistance section are welded together by a common electrically conductive connection section.

In another preferred embodiment, the measurement circuit is configured to measure the first measurement voltage and the second measurement voltage simultaneously. However, a measurement of the first measurement voltage and a measurement of the second measurement voltage can also be shifted to each other by a certain measurement time interval.

In order to provide regular tests for ensuring the functionality of the measurement circuit and the transmission of the overcurrent triggering signals, the first processing circuit may be configured to perform a self-test of the first overcurrent triggering signal and the second overcurrent triggering signal, by triggering the measurement circuit to either output the first overcurrent triggering signal or to output the second overcurrent triggering signal, and monitoring whether the respective overcurrent protection signal is received.

Hereby, the triggering of the measurement circuit is preferably performed by at least one of manipulating the input voltage of the measurement circuit, manipulating the reference voltage of the measurement circuit, or lowering the predetermined overcurrent value or a combination thereof. Advantageously, the battery management system further comprises a second processing circuit configured to monitor whether the first overcurrent triggering signal and/or the second overcurrent triggering signal is output by the measurement circuit, and configured to output to the overcurrent protection device controller a third interruption control signal and a fourth interruption control signal, when the first overcurrent protection signal and the second overcurrent protection signal are output by the measurement circuit, wherein the overcurrent protection device controller is configured to trigger the overcurrent protection device in response to receiving both of the third interruption control signal and the fourth interruption control signal.

In this manner, the present invention can provide a redundant control system, which can trigger the overcurrent protection in case of a failure of the main control system. The redundant control system can advantageously also be used for supervision of a function of the main control system, like the power supply of the main control system.

In order to supervise the functionality of the redundant control system, during the self-test of the first overcurrent protection signal or the second overcurrent protection signal, the first processing circuit may monitor whether the third interruption control signal or the fourth interruption control signal are output by the second processing circuit, respectively.

Advantageously, the first processing circuit can be configured to perform the self-test of the first overcurrent protection signal and the self-test of the second overcurrent protection subsequently to each other with a predefined periodicity. Accordingly, a functionality of the measurement circuit and the current sensor can be monitored regularly, so that a fault in one of these components can be detected quickly.

For independently isolating high voltage signals on a measurement side from low voltage signals on a processing circuit side, the battery management system may preferably comprise a first digital isolator for transmitting the first overcurrent triggering signal from the measurement circuit to the first processing circuit, and a second digital isolator for transmitting the second overcurrent triggering signal from the measurement circuit to the first processing circuit.

In another preferred embodiment, the overcurrent protection device controller may be configured to periodically monitor that an opening voltage applied for triggering the overcurrent protection device to interrupt charging or discharging of the battery is above a predetermined voltage value. In this manner, it can be ensured that an overcurrent voltage for triggering the overcurrent device always is large enough to provide an opening of the overcurrent protection device within a predefined opening time.

Preferably, hereby the overcurrent protection device controller periodically triggers the overcurrent protection device to interrupt charging or discharging of the battery for a predetermined amount of time, in order to monitor the opening voltage.

The present invention also relates to a battery pack comprising a battery and the battery management system according to the present invention.

The present invention further relates to a method for monitoring overcurrent in a battery management system, which comprises a first terminal for electrically connecting one terminal of a battery, a second terminal for electrically connecting at least one of an electrical load or a charger, and an overcurrent protection device conductively coupled between the first terminal and the second terminal, and configured to interrupt charging or discharging of the battery. The method comprises the steps of:
measuring a first measurement voltage and a second measurement voltage across a current sensor conductively coupled between the first terminal and the second terminal, wherein the first measurement voltage and the second measurement voltage are proportional to a battery current flowing between the first terminal and the second terminal,
outputting a first overcurrent triggering signal, if the first measurement voltage exceeds a predetermined overcurrent value for a predetermined time interval,
outputting a second overcurrent triggering signal, if the second measurement voltage exceeds a second predetermined overcurrent value for the predetermined time interval, monitoring whether the first overcurrent triggering signal and/or the second overcurrent triggering signal is output, and
controlling an overcurrent protection device controller, so as to interrupt charging or discharging of the battery, to trigger the overcurrent protection device, so as to interrupt charging or discharging of the battery, based on the detection of at least one of the first overcurrent triggering signal and the second overcurrent triggering signal.

In the following, the invention is described in more detail with reference to the attached figures and drawings. Similar or corresponding details in the figures are marked with the same reference numerals.

The accompanying drawings are incorporated into the specification and form a part of the specification to illustrate several embodiments of the present invention. These drawings, together with the description, serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments can thus be considered either alone or in an arbitrary combination thereof. The described embodiments are merely possible configurations, and it must be borne in mind that the individual features, as described above, can be provided independently of one another, or can be omitted altogether while implementing this invention. Further features and advantages will become apparent from the following, more particular description of the various embodiments of the invention, as illustrated in the accompanying drawings in which like references refer to like elements, and wherein:
**Fig. 1** shows a typical schematic circuit diagram of an energy storage system;
**Fig. 2** shows a schematic circuit diagram of a battery management system system according to the invention;
**Fig. 3** shows a schematic circuit diagram of an exemplary not being part of the invention overcurrent protection device controller;
**Fig. 4** shows an exemplary not being part of the invention schematic control logic of the first processing circuit during self test of the overcurrent triggering signals;
**Fig. 5** is a flowchart showing operations during the self test of the overcurrent triggering signal of figure 4.

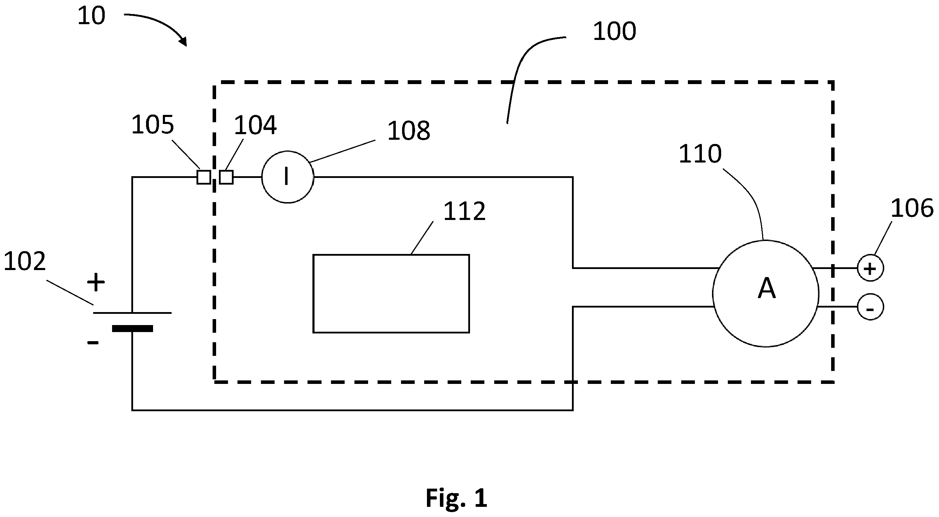

The present invention will now be explained in more detail with reference to the Figures and firstly referring to Fig. 1. Fig.1 shows a schematic circuit diagram of an energy storage system 10, in which a battery management system 100 is used for monitoring a current of a battery 102. The battery 102 may include one or more battery packs, which each are formed of at least one battery cell. In usual high voltage applications, the battery 102 may provide or store a voltage in the range of 400 V to 1 kV to an electric load like for example an electric motor of an electrical or hybrid electrical vehicle. However, also other voltage ranges are of course possible.

The battery management system 100 comprises a first terminal 104 for electrically connecting one terminal 105 of the battery 102. At least a second terminal 106 is provided for connecting the electric load or a charger for charging the battery 102. Here, the term "terminal" describes a point at which a conductor from an electric device, an electric circuit or an electric component ends, and where a point is provided for electrically connecting an external electric device, an external electric circuit or an external electric component to this conductor.

In order to measure a current of the battery 102 a current sensor 108, which may form an integral part of the battery management system 100, is conductively coupled between the first terminal 104 and the second terminal 106. The current sensor 108 is for example an analog device, which outputs a measurement voltage proportional to the battery current flowing between the first terminal 104 and the second terminal 106 and being supplied either from the battery 102 or from a charger connected to the battery 102 through the battery management system 100.

Advantageously, the current sensor 108 is designed redundantly, such that at least two analog measurement voltages, namely a first measurement voltage and a second measurement voltage, can be output, which are both proportional to the battery current. In this manner, a single point fault in one of the measurement branches of the current sensor 108 only affects one of the two measurement signals. Possibly such a redundant design can be achieved by providing a combination of two independent current sensors. Alternatively, a dual shunt, which may be formed of a copper or aluminum busbar having two defined resistive elements welded together, may be provided. Hereby, each of the resistive elements may be made of the same conductive material, for example any known copper alloy containing Cu, Mn, and/or Ni. Of course, each of the resistive elements can also be made of different conductive materials, for example different known copper alloys and thus having different specific electrical conductivities and temperature coefficients, which determines the sensor's measurement error, namely the change of resistance related to the reference temperature.

Accordingly, the dual shunt can provide two independent measurement voltage signals, which are both proportional to the battery pack current, but have different measurement errors.

For interrupting a current flow between the battery 102 and the electric load or the charger electrically connected to the battery 102, the battery management system 100 comprises an overcurrent protection device 110. The overcurrent protection device 110 is conducting current in a working state of the energy storage system 10, but is configured to break the current supplied from or to the battery in case that an overcurrent or short-circuit event occurs in the energy storage system 10. The overcurrent protection device 110 can be for example a contactor, which can be triggered to interrupt charging or discharging of the battery 102 by deenergizing a contactor coil 114 of the contactor. This drives a movable contact (moveable busbar) 116 provided in the current path between the first terminal 104 and the second terminal 106 away from a closed conducting position into an open non-conducting position. Preferably, hereby a voltage applied to the contactor coil for deenergizing is large enough, for example at least 60 V, so as to deenergize the contactor coil 114 within a time smaller than 150 µs. In this manner the current flowing through the battery 102 can be disconnected quickly.

Alternatively, the overcurrent protection device 110 can be a pyro fuse, which can be triggered to interrupt charging or discharging of the battery 102 by firing a pyro charge of the pyro fuse, which severs a busbar, provided in the current path between the first terminal 104 and the second terminal 106.

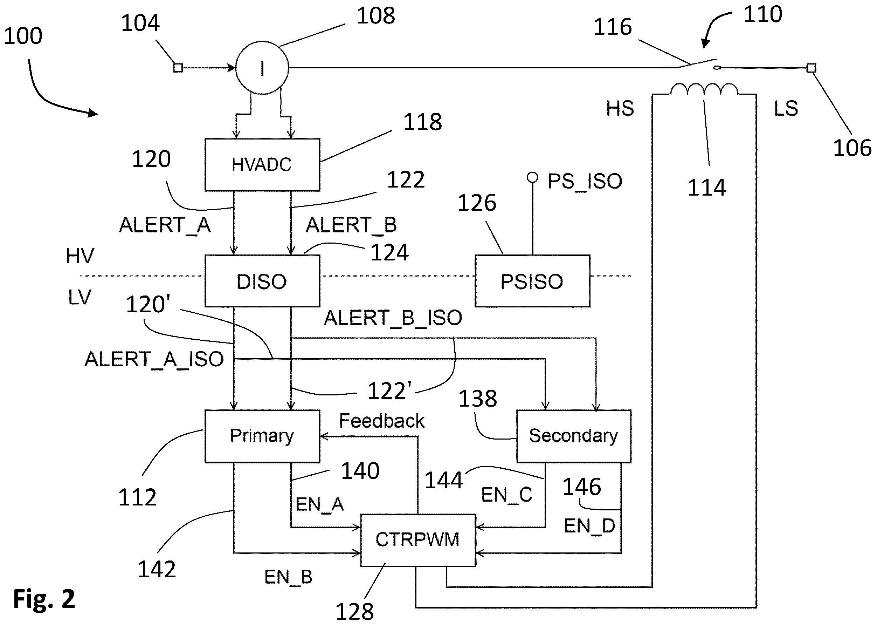

For controlling the operation of the overcurrent protection device 110 based on the current detected by the current sensor 108, the battery management system 100 comprises a control circuit 112 (first processing circuit), which for example is a microcontroller or integrated circuit. A detailed operation of the control circuit 112 will be described in the following with reference to Fig. 2.

Fig. 2 shows a schematic circuit diagram of the battery management system 100. In figure 2 of the invention, the overcurrent protection device is a contactor 110, comprising a contactor coil 114 and a moveable contact 116, which is in an open position (non-conducting) when the contactor coil 114 is not energized (shown in Fig. 2) and in a closed position when the contactor coil 114 is energized (not shown).

For making the analog measurement voltages measured by the current sensor 108 available for the control circuit 112, which in the following is also signified as first processing circuit or as primary control unit, the current sensor 108 is connected to an high voltage analog-to-digital converter (HVADC) 118, which serves as a measurement circuit 118 for measuring the measurement voltage proportional to the battery current. The HVADC 118 primarily is an analog-to-digital converter that converts the two analog measurement voltages output by the current sensor 108 into two digital measurement voltage signals. Those digital measurement voltage signals are made available to the control circuit 112 of the battery management system 100 by digital communication between the control circuit 112 and the HVADC 118 in order to calculate the battery current. The HVADC 118 is designed such that the battery current is sampled accurately, for example with an error smaller than 0.5% of the current value and quickly, i.e preferably with a sampling time smaller than 10 ms and more preferably with a sampling rate once per ms. The battery current calculated by the control circuit 112 can be used for various functions in the battery management system 100, such as state of charge estimation of the battery 102, control of the battery 102 and thermal control of the battery 102.

For the purpose of fast overcurrent detection, the HVADC 118 also features two digital output signals, namely the two redundant overcurrent triggering signals 120 (CUR_ALERT_A) and 122 (CUR_ALERT_B). Both overcurrent triggering signals 120 and 122 are set to high within 100 µs in case a short circuit event is detected by the HVADC 118. For this purpose, the HVADC 118 may for example comprise an internal trigger circuit, which triggers the output of the overcurrent triggering signals 120 and 122, in response to a detection of a short-circuit or overcurrent in the measurement voltage signals received from the current sensor 108. Further, the overcurrent triggering signals 120 and 122 can also be triggered when one of the relevant hardware faults of the HVADC 118 occurs, like for example reference drifts, pin shorts/open, IC internal faults, or power supply faults.

In particular, the HVADC 118 is configured to output the first overcurrent triggering signal 120 (CUR_ALERT_A), if the first measurement voltage across the current sensor 108 exceeds a first predetermined overcurrent value and to output the second overcurrent triggering signal 122 (CUR_ALERT_B), if the second measurement voltage across the current sensor 108 exceeds a second predetermined overcurrent value for the predetermined time interval. Here, the predetermined time interval may be in the range between 50 µs and 200 µs and preferably in the range between 100 µs to 150 µs. The first and the second predetermined overcurrent value may be same or different, depending on the known resistances of the current sensor 108 used for measuring the first measurement voltage and the second measurement voltage. In particular, the first and the second predetermined overcurrent values may be chosen in a way to correspond to a battery current in a range between 1000 A and 2000 A, for example 1500 A. However, the first and the second predetermined overcurrent may not necessarily fall in this range and may for example be adjustable or calibrated by software, so that the overcurrent protection of the battery management system 100 can be adapted to application scenarios.

It is conceivable, that the current sensor 108 and the HVADC 118 operate on the high voltage (HV) potential of the battery 102. That is particularly the case, if the analog current sensor 108 is provided in the form of a shunt type sensor, which is connected to the one terminal 105 of the high voltage battery 102. In such case, the overcurrent triggering signals 120 and 122 should be isolated so that they can be used on the low voltage potential of the battery management system 102. For this purpose, the battery management system 100 can comprise a digital isolator 124, which may for example be formed on complementary metal-oxide-semiconductor (CMOS) basis or as an optocoupler, and which galvanically separates the signals output by the HVADC 118 on the high-voltage side from the signals received by the control circuit 112. As schematically shown in Fig. 2, the digital isolator 124 converts the first overcurrent triggering signal 120 (CUR_ALERT_A) and the second overcurrent triggering signal 122 (CUR_ALERT_B), output by the HVADC 118 on the high voltage potential side, into the first isolated overcurrent triggering signal 120' (CUR_ALERT_A_ISO) and the second isolated overcurrent triggering signal 122' (CUR_ALERT_B_ISO), being useable by the control circuit 112 on the low voltage side of the battery management system 100.

Preferably, the overcurrent triggering signals 120 and 122 are routed through different circuits of the digital isolator 124 or more preferably are routed through independent separate digital isolators 124. In this manner, a failure in one circuit of the digital isolator 124 does not affect both of the overcurrent triggering signals 120 and 122, so that the risk of a common caused failure for both signals is further reduced.

In the case that the current sensor 108 and the HVADC 118 operate on the HV potential, an isolated power supply for those two components is required. For this purpose, the battery management system 100 comprises an isolated power supply 126 (PSISO). The isolated power supply 126 is permanently monitored by the control circuit 112. Hereby, a fault in the isolated power supply 126 is treated identically to a short circuit event signaled by the HVADC 118 to the control circuit 112. In this manner, it can be avoided that a single point fault of the isolated power supply 126 prevents the battery management system 100 from detecting and reacting to a battery pack overcurrent or short circuit.

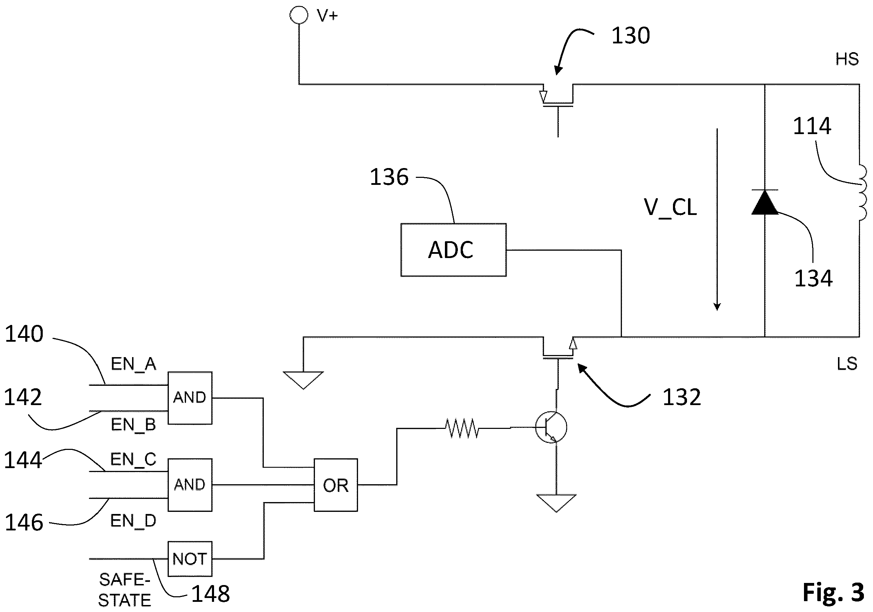

For controlling the state of the contactor 110 (overcurrent protection device), the battery management system 100 comprises a pulse-width modulation controller 128 (CTRPWM). In this example, the CTRPWM 128 is provided in the form of a hardware module. As shown in Fig. 3, the CTRPWM 128 controls the contactor coil 114 for opening and closing the contactor 110, using both a high side switch 130, which for example is a P-channel metal-oxide-semiconductor (PMOS), and low side switch 132, which for example is a N-type metal-oxide-semiconductor (NMOS). The CTRPWM 128 can close the contactor 110 by closing both the high side switch 130 and the low side switch 132. Furthermore, it can apply a pulse width modulation (PWM) to the low side switch 132 for coil economization.

When the contactor 110 is opened by the CTRPWM 128, the contactor coil 114 should preferably be de-energized quickly, i.e. within a duration preferably equal to or smaller than 150 µs, so that the current interruption capability of the contactor 110 is enhanced. Since a higher clamping voltage V_{CL} applied to the contactor coil 114 in the moment of the opening of the contactor 110 can accelerate the deenergization of the contactor coil 114, the clamping voltage V_{CL} is preferably chosen to be at least 40 V, more preferably to be larger than 60 V and most preferably to be approximately 80V in the moment of opening the contactor 110. Thus clamping voltages V_{CL} can for example be achieved by providing a clamping diode 134 conductively coupled in parallel to the contactor coil 114.

For ensuring that sufficient clamping voltage V_{CL} is provided in a case of a short circuit or overcurrent in the energy storage system 10, the clamping voltage V_{CL} is preferably periodically tested. For example, such periodicity can be once every 10 ms or once every 100 ms. For this purpose, the battery management system comprises a peripheral measurement circuit 136, which is configured to measure the clamping voltage V_{CL} and feedback the measured clamping voltage V_{CL} to the control circuit 112. In this manner, the control circuit 112 can periodically monitor that the clamping voltage V_{CL} used for triggering the contactor 110 to interrupt charging or discharging of the battery 102 is above a desired predetermined opening voltage value, so that fast deenergization of the contactor coil 114 can be guaranteed.

The opening of the contactor 110 in case of a short circuit or an overcurrent in the energy storage system 10 is triggered by the CTRPWM 128 based on the control of the primary control unit 112 (control circuit 112) or based on the control of a secondary control unit 138, which may be also signified as a second processing circuit.

For this purpose, the primary control unit 112 outputs a first interruption control signal 140 (EN_A) and a second interruption control signal 142 (EN_B) in response to detecting that the HVADC 118 has output (set to high) at least one of the first overcurrent triggering signal 120 (120') or the second overcurrent triggering signal 122 (122'). In order to achieve fast response times below or equal to 10 µs, for example, an hardware (HW) Edge triggered software (SW)-interrupt can be implemented in the primary control unit 112 for this purpose. In such an implementation, for example a rising edge, i.e. a transition from low to high of at least one of the overcurrent triggering signals 120 (120') and 122 (122') detected by the primary control unit 112 triggers an SW interrupt in the primary control unit 112, which leads to the output of the first interruption control signal 140 and the second interruption control signal 142.

In response to detecting both of the first interruption control signal 140 and the second interruption control signal 142 simultaneously, the CTRPWM 128 is configured to open the low side switch 132, which leads to a deenergization of the contactor coil 114 and thus to an opening of the contactor 110. Since the CTRPWM 128 only opens the low side switch in case of detecting both of the first and the second interruption control signals 140 and 142, a single fault in a transmission line of one of the first and the second interruption control signals 140 and 142 cannot trigger a faulty opening of the contactor 110.

The primary control unit 112 can also use the interruption control signals 140 and 142 for periodically testing that the clamping voltage V_{CL} is sufficiently high enough for a fast deenergization of the contactor. Specifically, the primary control unit 112 can output the first and second interruption control signals 140 and 142 to the CTRPWM 128 for a short time period of, for example, 100 µs and thus force a brief opening of the contactor 110 during said time period. The clamping voltage V_{CL} measured by the peripheral measurement circuit 136 and feedback to the primary control unit 112 can then be monitored by the primary control unit 112 during said time period and be compared to a predetermined reference value of the desired opening voltage value.

In addition to the control of the primary control unit 112, the battery management system 100 preferably comprises the secondary control unit 138, which is intended to be a backup of the primary control unit 112, especially for the case that a random hardware fault in the first control unit 112, for example within the microcontroller, prevents the first control unit 112 from executing its intended functionality correctly.

For that purpose, the secondary control unit 138 monitors whether the first overcurrent triggering signal 120 and/or the second overcurrent triggering signal 122 is output by the HVADC 118. In response to detecting that the HVADC 118 has output (set to high) both of the first overcurrent triggering signal 120 (120') and the second overcurrent triggering signal 122 (122') at the same time, the secondary control unit 138 outputs a third interruption control signal 144 (EN_C) and a fourth interruption control signal 146 (EN_D) to the CTRPWM 128. Accordingly, the secondary control unit 138 only outputs the third and fourth interruption control signals 144 and 146, in response to detecting that the first overcurrent triggering signal 120 (120') and the second overcurrent triggering signal 122 (122') are output at the same time, but in contrast to the primary control unit 112 does not react if only one of the first overcurrent triggering signal 120 (120') or the second overcurrent triggering signal 122 (122') is detected.

In response to detecting both of the third interruption control signal 144 and the fourth interruption control signal 146 simultaneously, the CTRPWM 128 is configured to open the low side switch 132, which leads to a deenergization of the contactor coil 114 and thus to an opening of contactor 110. Since, the CTRPWM 128 only opens the low side switch in case of detecting both of the third and fourth interruption control signals 144 and 146, a single fault in a transmission line of one of the third and fourth interruption control signals 144 and 146 can not trigger a faulty opening of the contactor 110.

In addition, the secondary control unit 138 can supervise the power supply for the primary control unit 112. In case of a failure in the power supply of the primary control unit 112, the signal 148 (SAFESTATE) is set to LOW, which shall also trigger the CTRPWM 128 to open the low side switch 132 for opening the contactor 110.

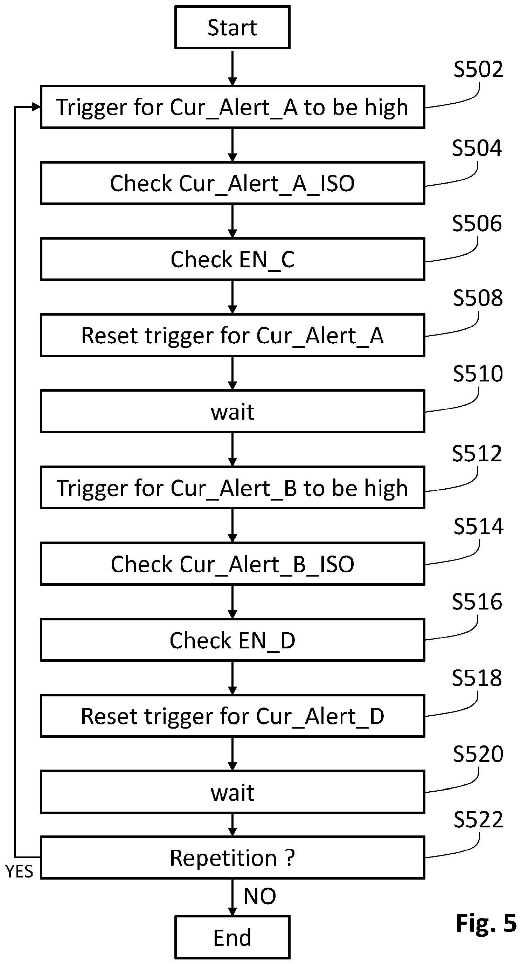

With respect to Fig. 5, in the following a self-test of the first overcurrent triggering signal 120 (120') and of the second overcurrent triggering signal 122 (122') is described, which may be performed by the primary control unit 112, in order to ensure the integrity of the HVADC 118, the digital isolator 124 and the transmission lines provided for transmitting the overcurrent triggering signals. Also the functionality of the response of the secondary control unit 138 in response to the first overcurrent triggering signal 120 (120') and of the second overcurrent triggering signal 122 (122') can be checked in the self-test.

The primary control unit 112 starts with a test of the transmission branch of the first overcurrent triggering signal 120.

For this purpose, the primary control unit 112 first forces the HVADC 118 or a trigger circuit implemented in the HVADC 118 to output the CUR_ALER_A signal as the first overcurrent triggering signal 120 (step 502), by injecting a fault in the HVADC 118. Such fault may for example be induced by manipulating the input voltage of the first measurement voltage received by the HVADC 118 from the current sensor 108, manipulating the reference voltage of the HVADC 118 for converting the input voltage of the first measurement voltage into a digital signal, or by changing the first predetermined overcurrent value of the HVADC 118 to a low value. Further, these fault inducing methods may be combined in order to trigger the first overcurrent triggering signal 120 to be output by the HVADC 118.

In the next step, the primary control unit 112 detects whether the signal CUR ALERT A_ISO is set to be high, i.e. whether the first overcurrent triggering signal 120 (120') is received in response to the induced fault (step S504). In case that the first overcurrent triggering signal 120 (120') is not detected, the primary control unit 112 notifies a point fault of the first overcurrent triggering signal 120 (120') and may notify a superior control unit, like an electronic control unit of a vehicle that a fault has been occurred in the overcurrent protection system of the battery management system 100.

Next, the primary control unit 112 detects whether the signal EN_C is set to high by the secondary control unit 138 as the third interruption control signal 144 in response to the induced fault (step S506). In case that the third interruption control signal 144 is not detected, the primary control unit 112 notifies a point fault of the third interruption control signal 144 and may notify a superior control unit, like an electronic control unit of a vehicle, that a fault has been occurred in the secondary control unit 138 of the overcurrent protection system of the battery management system 100.

After completing the checks of the first overcurrent triggering signal 120 (120') and the third interruption control signal 144, the primary control unit 112 removes the trigger for the fault in the HVADC (step S508) and waits for a predetermined waiting time (step S510).

Then the self-test procedure is repeated for the transmission branch of the second overcurrent triggering signal 122.

For this purpose, the primary control unit 112 forces the HVADC 118 or a trigger circuit implemented in the HVADC 118 to output the CUR_ALER_B signal as the second overcurrent triggering signal 122 (step 512), by injecting a fault in the HVADC 118. Such an induced fault may for example induced by manipulating the input voltage of the second measurement voltage received by the HVADC 118 from the current sensor 108, manipulating the reference voltage of the HVADC 118 for converting the input voltage of the second measurement voltage into a digital signal, or by changing the second predetermined overcurrent value of the HVADC 118 to a low value. Further, each of these fault inducing methods may be combined in order to trigger the second overcurrent triggering signal 122 to be output by the HVADC 118.

In the next step, the primary control unit 112 detects whether the signal CUR ALERT_B_ISO is set to be high, i.e. whether the second overcurrent triggering signal 122 (122') is received in response to the induced fault (step S514). In case that the second overcurrent triggering signal 122 (122') is not detected, the primary control unit 112 notifies a point fault of the second overcurrent triggering signal 122 (122') and may notify a superior control unit, like an electronic control unit of a vehicle that a fault has been occurred in the overcurrent protection system of the battery management system 100.

Next, the primary control unit 112 detects whether the signal EN_D is set to high by the secondary control unit 138 as the fourth interruption control signal 146 in response to the induced fault (step S516). In case that the fourth interruption control signal 146 is not detected, the primary control unit 112 notifies a point fault of the fourth interruption control signal 146 and may notify a superior control unit, like an electronic control unit of a vehicle, that a fault has been occurred in the secondary control unit 138 of the overcurrent protection system of the battery management system 100.

After completing the checks of the second overcurrent triggering signal 122 (122') and the fourth interruption control signal 146, the primary control unit 112 removes the trigger for the fault in the HVADC (step S518) and waits for a predetermined waiting time (step S520).

It is then decided in step 522 whether the self-test procedure should be repeated (Yes in step S522), or the self-test should be stopped (NO in step S522).

In order to ensure, that during the self-test of either the first overcurrent triggering signal 120 or the second overcurrent triggering signal 122 no unwanted opening of the contactor 110 occurs, it is ensured that during the self-test procedure, it is always avoided to force the HVADC 118 to output both of the first and the second overcurrent triggering signals 120 and 122 in the absence of an actual short circuit or overcurrent.

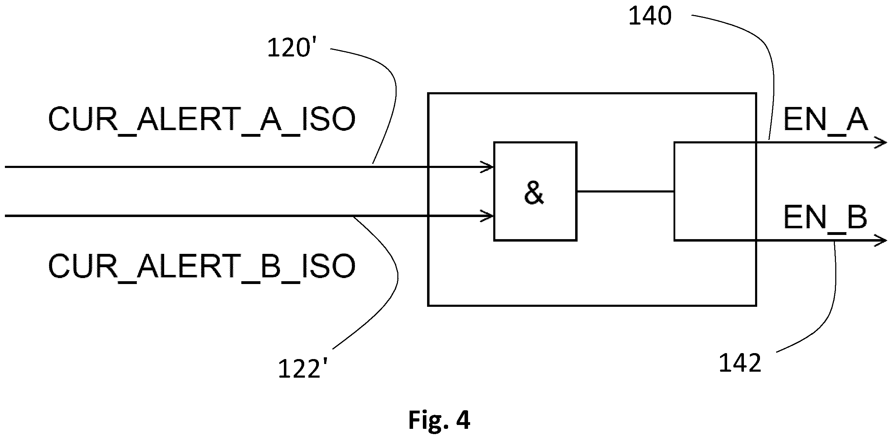

Further, it is ensured that during the time of forcing the HVADC 118 to output the first overcurrent triggering signal 120 or to output the second overcurrent triggering signal 122, the primary control unit 112 deactivates the output of the first interruption control signal 140 (EN_A) and the second interruption control signal 142 (EN_B) in response to receiving only one of the first overcurrent triggering signal 120 and the second overcurrent triggering signal 122, but only outputs the interruption control signals 140 and 142 in response to receiving both of the first and second overcurrent triggering signals 120 and 122 (see Fig. 4) at the same time. In other words, during the time of the self-test of one of the overcurrent triggering signals, the primary control unit 112 does not control the CTRPWM 128 to trigger an opening of the contactor 110 based on a signal level of the self-tested overcurrent triggering signal. Instead, the first and second interruption control signals 140 and 142 are only output to the CTRPWM 128 to trigger in response to detecting the overcurrent triggering signal, which is not self-tested, i.e based on a signal level of the overcurrent triggering signal, which is not self-tested.

Furthermore, by suitable choice of the waiting times in steps S510 and S520, it is ensured that the duration of the self tests of the first and second overcurrent triggering signals 120 and 122 are limited to at most 0.1% of the working time of the energy storage system 10 each, hence limiting the time where the system is relying on one instead of on two overcurrent triggering signals.

While in this disclosure the overcurrent protection of the energy storage system has been described so far by the example of using the contactor 110 as the overcurrent protection device, it is apparent that a pyro fuse could also be used instead of the contactor 110 as the overcurrent protection device. In such an application, the CTRPWM 128 is replaced by a pyro fuse controller, which is adapted to respond to the interruption control signals output by the primary control unit 112 or the secondary control unit 138 in the same manner as described above for the CTRPWM 128. In particular, in response to receiving the first and second interruption control signals 140 and 142 at the same time and/or receiving the third and fourth interruption control signals 144 and 146 at the same time, the pyro fuse controller may transmit to the pyro fuse an electrical ignition control signal to ignite a pyrotechnical squib of the pyro fuse. Actuated by the electrical ignition control signal, the pyrotechnical squib can for example sever a busbar being conductively coupled between the first terminal 104 and the second terminal 106, in order to permanently interrupt charging or discharging of the battery 102.

| | |
|---|---|
| 10 | energy storage system |
| 100 | battery management system |
| 102 | battery |
| 104 | first terminal |
| 105 | battery terminal |
| 106 | second terminal |
| 108 | current sensor |
| 110 | contactor (overcurrent protection device) |
| 112 | control circuit (primary control unit) |
| 114 | contactor coil |
| 116 | moveable contact |
| 118 | HVADC (measurement circuit) |
| 120 | first overcurrent triggering signal (CUR_ALERT_A) |
| 120' | isolated first overcurrent triggering signal (CUR_ALERT_A_ISO) |
| 122 | second overcurrent triggering signal (CUR_ALERT_B) |
| 122' | isolated second overcurrent triggering signal (CUR_ALERT_B_ISO) |
| 124 | digital isolator |
| 126 | isolated power supply |
| 128 | CTRPWM (overcurrent protection device controller) |
| 130 | high side switch |
| 132 | low side switch |
| 134 | clamping diode |
| 136 | peripheral measurement circuit |
| 138 | secondary control unit |
| 140 | first interruption control signal (EN_A) |
| 142 | second interruption control signal (EN_B) |
| 144 | third interruption control signal (EN_C) |
| 146 | fourth interruption control signal (EN_D) |

## Claims

1. A battery management system (100) comprising:
a first terminal (104) for electrically connecting one terminal (105) of a battery (102),
a second terminal (106) for electrically connecting at least one of an electric load or a charger,
an overcurrent protection device (110) conductively coupled between the first terminal (104) and the second terminal (106), and configured to interrupt charging or discharging of the battery (102),
an overcurrent protection device controller (128) configured to trigger the overcurrent protection device (110), so as to interrupt charging or discharging of the battery (102),
a current sensor (108) conductively coupled between the first terminal (104) and the second terminal (106),
a measurement circuit (118) configured to measure a first measurement voltage and a second measurement voltage across the current sensor (108), wherein the first measurement voltage and the second measurement voltage are proportional to a battery current flowing between the first terminal (104) and the second terminal (106), and configured to output a first overcurrent triggering signal (120), if the first measurement voltage exceeds a predetermined overcurrent value for a predetermined time interval, and to output a second overcurrent triggering signal (122), if the second measurement voltage exceeds a second predetermined overcurrent value for the predetermined time interval, and
a first processing circuit (112) configured to monitor whether the first overcurrent triggering signal (120) and/or the second overcurrent triggering signal (122) is output by the measurement circuit (118), and configured to control the overcurrent protection device controller (128) to trigger the overcurrent protection device (110) based on the detection of at least one of the first overcurrent triggering signal (120) and the second overcurrent triggering signal (122).

2. The battery management system according to claim 1, wherein the first processing circuit (112) is configured to output to the overcurrent protection device controller (128) a first interruption control signal (140) and a second interruption control signal (142), when at least one of the first overcurrent triggering signal (120) and the second overcurrent triggering signal (122) is output by the measurement circuit (118), wherein the overcurrent protection device controller (128) is configured to trigger the overcurrent protection device (110) in response to detecting the first interruption control signal (140) and the second interruption control signal (142).

3. The battery management system according to claim 1 or 2, wherein the current sensor (108) comprises a first resistance section comprising a resistive material having a first specific electrical conductivity and a first temperature coefficient, and a second resistance section comprising a second resistive material having a second specific electrical conductivity and a second temperature coefficient, and
wherein the measurement circuit (118) is configured to measure the first measurement voltage across the first resistance section and to measure the second measurement voltage across the second resistance section.

4. The battery management system according to claim 3, wherein the current sensor (108) is formed as a dual shunt resistor, wherein the first resistance section and the second resistance section are welded together by a common electrically conductive connection section.

5. The battery management system according to one of claims 1 to 4, wherein the measurement circuit (118) is configured to measure the first measurement voltage and the second measurement voltage simultaneously.

6. The battery management system according to one of claims 1 to 5, wherein the first processing circuit (112) is configured to perform a self-test of the first overcurrent triggering signal (120) and the second overcurrent triggering signal (122), by triggering the measurement circuit (118) to either output the first overcurrent triggering signal (120) or to output the second overcurrent triggering signal (122), and monitoring whether the respective overcurrent triggering signal is received.

7. The battery management system according to claim 6, wherein the triggering of the output of the measurement circuit (118) is performed by at least one of
- manipulating an input voltage of the measurement circuit (118);
- manipulating a reference voltage of the measurement circuit (118); or
- lowering the first or second predetermined overcurrent value.

8. The battery management system according to one of claims 1 to 7, further comprising a second processing circuit (138) configured to monitor whether the first overcurrent triggering signal (120) and/or the second overcurrent triggering signal (122) is output by the measurement circuit (118), and configured to output to the overcurrent protection device controller (110) a third interruption control signal (144) and a fourth interruption control signal (146), when the first overcurrent triggering signal (120) and the second overcurrent triggering signal (122) are output by the measurement circuit,
wherein the overcurrent protection device controller (128) is configured to trigger the overcurrent protection device (110) in response to receiving both of the third interruption control signal (144) and the fourth interruption control signal (146).

9. The battery management system according to claim 8, wherein during the self-test of the first overcurrent triggering signal (120) or the second overcurrent triggering signal (122), the first processing circuit (112) monitors whether the third interruption control signal (144) or the fourth interruption control signal (146) are output by the second processing circuit (138), respectively.

10. The battery management system according to one of claims 6 to 9, wherein the first processing circuit (112) is configured to perform the self-test of the first overcurrent triggering signal (120) and the self-test of the second overcurrent triggering (122) subsequently to each other with a predefined periodicity.

11. The battery management system according to one of claims 1 to 10, further comprising a first digital isolator for transmitting the first overcurrent triggering signal (120) from the measurement circuit (118) to the first processing circuit (112), and a second digital isolator for transmitting the second overcurrent triggering signal (122) from the measurement circuit (118) to the first processing circuit (112).

12. The battery management system according to one of claims 1 to 11, wherein the overcurrent protection device controller (128) is configured to periodically monitor that an opening voltage applied for triggering the overcurrent protection device (110) to interrupt charging or discharging of the battery (102) is above a predetermined voltage value.

13. The battery management system according to claim 12, wherein the overcurrent protection device controller (128) periodically triggers the overcurrent protection device (110) to interrupt charging or discharging of the battery for a predetermined amount of time, in order to monitor the opening voltage.

14. A battery pack comprising,
a battery (102) and,
the battery management system (100) according to one of claims 1 to 13.

15. A method for monitoring overcurrent in a battery management system (100), which comprises a first terminal (104) for electrically connecting one terminal (105) of a battery (102), a second terminal (106) for electrically connecting at least one of an electrical load or a charger, and an overcurrent protection device (110) conductively coupled between the first terminal (104) and the second terminal (106), and configured to interrupt charging or discharging of the battery (102), the method comprising the steps of:
measuring a first measurement voltage and a second measurement voltage across a current sensor (108) conductively coupled between the first terminal (104) and the second terminal (106), wherein the first measurement voltage and the second measurement voltage are proportional to a battery current flowing between the first terminal (104) and the second terminal (106),
outputting a first overcurrent triggering signal (120), if the first measurement voltage exceeds a predetermined overcurrent value for a predetermined time interval,
outputting a second overcurrent triggering signal (122), if the second measurement voltage exceeds a second predetermined overcurrent value for the predetermined time interval,
monitoring whether the first overcurrent triggering signal (120) and/or the second overcurrent triggering signal (122) is output, and
controlling an overcurrent protection device controller (128) to trigger the overcurrent protection device (110), so as to interrupt charging or discharging of the battery (102), based on the detection of at least one of the first overcurrent triggering signal (120) and the second overcurrent triggering signal (122).

## Patentansprüche

1. Batteriemanagementsystem (100), das umfasst:
einen ersten Anschluss (104) zum elektrischen Anschließen einer Polklemme (105) einer Batterie (102),
einen zweiten Anschluss (106) zum elektrischen Anschließen einer elektrischen Last oder/und einer Ladeeinrichtung,
eine Überstromschutzvorrichtung (110), die leitend zwischen den ersten Anschluss (104) und den zweiten Anschluss (106) geschaltet und so konfiguriert ist, dass sie Laden oder Entladen der Batterie (102) unterbricht,
eine Steuerungseinrichtung (128) für die Überstromschutzvorrichtung, die so konfiguriert ist, dass sie die Überstromschutzvorrichtung (110) auslöst, um Laden oder Entladen der Batterie (102) zu unterbrechen,
einen Stromsensor (108), der leitend zwischen den ersten Anschluss (104) und den zweiten Anschluss (106) geschaltet ist,
eine Messungs-Schaltung (118), die so konfiguriert ist, dass sie eine erste Messungs-Spannung und eine zweite Messungs-Spannung über den Stromsensor (108) misst, wobei die erste Messungs-Spannung und die zweite Messungs-Spannung proportional zu einem Batteriestrom sind, der zwischen dem ersten Anschluss (104) und dem zweiten Anschluss (106) fließt, und die so konfiguriert ist, dass sie ein erstes Überstrom-Auslösesignal (120) ausgibt, wenn die erste Messungs-Spannung über ein vorgegebenes Zeitintervall einen vorgegebenen Überstromwert überschreitet, und dass sie ein zweites Überstrom-Auslösesignal (122) ausgibt, wenn die zweite Messungs-Spannung über das vorgegebene Zeitintervall einen zweiten vorgegebenen Überstromwert überschreitet, und
eine erste Verarbeitungs-Schaltung (112), die so konfiguriert ist, dass sie überwacht, ob das erste Überstrom-Auslösesignal (120) und/oder das zweite Überstrom-Auslösesignal (122) von der Messungs-Schaltung (118) ausgegeben werden/wird, und die so konfiguriert ist, dass sie die Steuerungseinrichtung (128) für die Überstromschutzvorrichtung auf Basis der Erfassung des ersten Überstrom-Auslösesignals (120) oder/und des zweiten Überstrom-Auslösesignals (122) zum Auslösen der Überstromschutzvorrichtung (110) steuert.

2. Batteriemanagementsystem nach Anspruch 1, wobei die erste Verarbeitungs-Schaltung (112) so konfiguriert ist, dass sie ein erstes Unterbrechungs-Steuerungssignal (140) und ein zweites Unterbrechungs-Steuerungssignal (142) an die Steuerungseinrichtung (128) für die Überstromschutzvorrichtung ausgibt, wenn das erste Überstrom-Auslösesignal (120) oder/und das zweite Überstrom-Auslösesignal (122) von der Messungs-Schaltung (118) ausgegeben wird/werden,
wobei die Steuerungseinrichtung (128) für die Überstromschutzvorrichtung so konfiguriert ist, dass sie die Überstromschutzvorrichtung (110) in Reaktion darauf auslöst, dass das erste Unterbrechungs-Steuerungssignal (140) und das zweite Unterbrechungs-Steuerungssignal (142) erfasst werden.

3. Batteriemanagementsystem nach Anspruch 1 oder 2, wobei der Stromsensor (108) einen ersten Widerstandsabschnitt, der ein Widerstandsmaterial mit einer ersten spezifischen elektrischen Leitfähigkeit und einem ersten Temperaturkoeffizienten umfasst, sowie einen zweiten Widerstandsabschnitt umfasst, der ein zweites Widerstandsmaterial mit einer zweiten spezifischen elektrischen Leitfähigkeit und einem zweiten Temperaturkoeffizienten umfasst, und
die Messungs-Schaltung (118) so konfiguriert ist, dass sie die erste Messungs-Spannung über den ersten Widerstandsabschnitt misst und die zweite Messungs-Spannung über den zweiten Widerstandsabschnitt misst.

4. Batteriemanagementsystem nach Anspruch 3, wobei der Stromsensor als ein doppelter Nebenschlusswiderstand ausgebildet ist, und der erste Widerstandsabschnitt und der zweite Widerstandsabschnitt über einen gemeinsamen elektrisch leitenden Verbindungsabschnitt miteinander verschweißt sind.

5. Batteriemanagementsystem nach einem der Ansprüche 1 bis 4, wobei die Messungs-Schaltung (118) so konfiguriert ist, dass sie die erste Messungs-Spannung und die zweite Messungs-Spannung gleichzeitig misst.

6. Batteriemanagementsystem nach einem der Ansprüche 1 bis 5, wobei die erste Verarbeitungs-Schaltung (112) so konfiguriert ist, dass sie einen Selbsttest des ersten Überstrom-Auslösesignals (120) und des zweiten Überstrom-Auslösesignals (122) durchführt, indem sie die Messungs-Schaltung (118) entweder zum Ausgeben des ersten Überstrom-Auslösesignals (120) oder zum Ausgeben des zweiten Überstrom-Auslösesignals (122) auslöst, und überwacht, ob das jeweilige Überstrom-Auslösesignal empfangen wird.

7. Batteriemanagementsystem nach Anspruch 6, wobei das Auslösen der Ausgabe der Messungs-Schaltung (118) durchgeführt wird mittels:
- Manipulieren einer Eingangsspannung der Messungs-Schaltung (118);
- Manipulieren einer Bezugsspannung der Messungs-Schaltung (118); oder/und
- Absenken des ersten oder des zweiten vorgegebenen Überstromwertes.

8. Batteriemanagementsystem nach einem der Ansprüche 1 bis 7, das des Weiteren eine zweite Verarbeitungs-Schaltung (138) umfasst, die so konfiguriert ist, dass sie überwacht, ob das erste Überstrom-Auslösesignal (120) und/oder das zweite Überstrom-Auslösesignal (122) von der Messungs-Schaltung (118) ausgegeben werden/wird, und die so konfiguriert ist, dass sie an die Steuerungseinrichtung für die Überstromschutzvorrichtung (110) ein drittes Unterbrechungs-Steuerungssignal (144) sowie ein viertes Unterbrechungs-Steuerungssignal (146) ausgibt, wenn das erste Überstrom-Auslösesignal (120) und das zweite Überstrom-Auslösesignal (122) von der Messungs-Schaltung ausgegeben werden,
und die Steuerungseinrichtung (128) für die Überstromschutzvorrichtung so konfiguriert ist, dass sie die Überstromschutzvorrichtung (110) in Reaktion darauf auslöst, dass sowohl das dritte Unterbrechungs-Steuerungssignal (144) als auch das vierte Unterbrechungs-Steuerungssignal (146) empfangen werden.

9. Batteriemanagementsystem nach Anspruch 8, wobei während des Selbsttests des ersten Überstrom-Auslösesignals (120) oder des zweiten Überstrom-Auslösesignals (122) die erste Verarbeitungs-Schaltung (112) überwacht, ob das dritte Unterbrechungs-Steuerungssignal (144) bzw. das vierte Unterbrechungs-Steuerungssignal (146) von der zweiten Verarbeitungs-Schaltung (138) ausgegeben wird.

10. Batteriemanagementsystem nach einem der Ansprüche 6 bis 9, wobei die erste Verarbeitungs-Schaltung (112) so konfiguriert ist, dass sie den Selbsttest des ersten Überstrom-Auslösesignals (120) und den Selbsttest des zweiten Überstrom-Auslösesignals (122) nacheinander mit einer vordefinierten Periodizität durchführt.

11. Batteriemanagementsystem nach einem der Ansprüche 1 bis 10, das des Weiteren einen ersten digitalen Isolator zum Übertragen des ersten Überstrom-Auslösesignals (120) von der Messungs-Schaltung (118) zu der ersten Verarbeitungs-Schaltung (112) sowie einen zweiten digitalen Isolator zum Übertragen des zweiten Überstrom-Auslösesignals (122) von der Messungs-Schaltung (118) zu der ersten Verarbeitungs-Schaltung (112) umfasst.

12. Batteriemanagementsystem nach einem der Ansprüche 1 bis 11, wobei die Steuerungseinrichtung (128) für die Überstromschutzvorrichtung so konfiguriert ist, dass sie periodisch überwacht, dass eine zum Auslösen der Überstromschutzvorrichtung (110) angelegte Öffnungs-Spannung zum Unterbrechen von Laden oder Entladen der Batterie (102) über einem vorgegebenen Spannungswert liegt.

13. Batteriemanagementsystem nach Anspruch 12, wobei die Steuerungseinrichtung (128) für die Überstromschutzvorrichtung die Überstromschutzvorrichtung (110) periodisch auslöst, um Laden oder Entladen der Batterie über einen bestimmten Zeitraum zu unterbrechen und die Öffnungs-Spannung zu überwachen.

14. Batteriepack, das umfasst:
eine Batterie (102) sowie
das Batteriemanagementsystem (100) nach einem der Ansprüche 1 bis 13.

15. Verfahren zum Überwachen von Überstrom in einem Batteriemanagementsystem (100), das einen ersten Anschluss (104) zum elektrischen Anschließen einer Polklemme (105) einer Batterie (102), einen zweiten Anschluss (106) zum elektrischen Anschließen einer elektrischen Last oder/und einer Ladeeinrichtung sowie eine Überstromschutzvorrichtung (110) umfasst, die leitend zwischen den ersten Anschluss (104) und den zweiten Anschluss (106) geschaltet und so konfiguriert ist, dass sie Laden oder Entladen der Batterie (102) unterbricht, wobei das Verfahren die folgenden Schritte umfasst:
Messen einer ersten Messungs-Spannung und einer zweiten Messungs-Spannung über einen Stromsensor (108), der leitend zwischen den ersten Anschluss (104) und den zweiten Anschluss (106) geschaltet ist, wobei die erste Messungs-Spannung und die zweite Messungs-Spannung proportional zu einem Batteriestrom sind, der zwischen dem ersten Anschluss (104) und dem zweiten Anschluss (106) fließt,
Ausgeben eines ersten Überstrom-Auslösesignals (120), wenn die erste Messungs-Spannung über ein vorgegebenes Zeitintervall einen vorgegebenen Überstromwert überschreitet,
Ausgeben eines zweiten Überstrom-Auslösesignals (122), wenn die zweite Messungs-Spannung über das vorgegebene Zeitintervall einen zweiten vorgegebenen Überstromwert überschreitet,
Überwachen, ob das erste Überstrom-Auslösesignal (120) und/oder das zweite Überstrom-Auslösesignal (122) ausgegeben werden/wird, sowie
Steuern einer Steuerungseinrichtung (128) für die Überstromschutzvorrichtung zum Auslösen der Überstromschutzvorrichtung (110) und Unterbrechen von Laden oder Entladen der Batterie (102) auf Basis der Erfassung des ersten Überstrom-Auslösesignals (120) oder/und des zweiten Überstrom-Auslösesignals (122).

## Revendications

1. Système de gestion de batterie (100) comprenant :
une première borne (104) destinée à se connecter électriquement à une borne (105) d'une batterie (102),
une deuxième borne (106) destinée à se connecter électriquement à au moins une charge électrique ou un chargeur,
un dispositif de protection contre les surintensités (110) couplé de manière conductrice entre la première borne (104) et la deuxième borne (106), et configuré pour interrompre la charge ou la décharge de la batterie (102),
une unité de commande de dispositif de protection contre les surintensités (128) configurée pour déclencher le dispositif de protection contre les surintensités (110), de manière à interrompre la charge ou la décharge de la batterie (102),
un capteur de courant (108) couplé de manière conductrice entre la première borne (104) et la deuxième borne (106),
un circuit de mesure (118) configuré pour mesurer une première tension de mesure et une deuxième tension de mesure aux bornes du capteur de courant (108), dans lequel la première tension de mesure et la deuxième tension de mesure sont proportionnelles à un courant de batterie circulant entre la première borne (104) et la deuxième borne (106), et configuré pour délivrer en sortie un premier signal de déclenchement de surintensité (120), si la première tension de mesure dépasse une valeur de surintensité prédéterminée pendant un intervalle de temps prédéterminé, et pour délivrer en sortie un deuxième signal de déclenchement de surintensité (122), si la deuxième tension de mesure dépasse une deuxième valeur de surintensité prédéterminée pendant l'intervalle de temps prédéterminé, et
un premier circuit de traitement (112) configuré pour surveiller si le premier signal de déclenchement de surintensité (120) et/ou le deuxième signal de déclenchement de surintensité (122) est délivré en sortie par le circuit de mesure (118), et configuré pour commander l'unité de commande de dispositif de protection contre les surintensités (128) pour déclencher le dispositif de protection contre les surintensités (110) sur la base de la détection d'au moins l'un parmi le premier signal de déclenchement de surintensité (120) et le deuxième signal de déclenchement de surintensité (122).

2. Système de gestion de batterie selon la revendication 1, dans lequel le premier circuit de traitement (112) est configuré pour délivrer en sortie à l'unité de commande de dispositif de protection contre les surintensités (128) un premier signal de commande d'interruption (140) et un deuxième signal de commande d'interruption (142), lorsqu'au moins l'un parmi le premier signal de déclenchement de surintensité (120) et le deuxième signal de déclenchement de surintensité (122) est délivré en sortie par le circuit de mesure (118),
dans lequel l'unité de commande de dispositif de protection contre les surintensités (128) est configurée pour déclencher le dispositif de protection contre les surintensités (110) en réponse à la détection du premier signal de commande d'interruption (140) et du deuxième signal de commande d'interruption (142).

3. Système de gestion de batterie selon la revendication 1 ou 2, dans lequel le capteur de courant (108) comprend une première section de résistance comprenant un matériau résistif ayant une première conductivité électrique spécifique et un premier coefficient de température, et une deuxième section de résistance comprenant un deuxième matériau résistif ayant une deuxième conductivité électrique spécifique et un deuxième coefficient de température, et
dans lequel le circuit de mesure (118) est configuré pour mesurer la première tension de mesure aux bornes de la première section de résistance et pour mesurer la deuxième tension de mesure aux bornes de la deuxième section de résistance.

4. Système de gestion de batterie selon la revendication 3, dans lequel le capteur de courant (108) est formé comme une résistance shunt double, dans lequel la première section de résistance et la deuxième section de résistance sont soudées ensemble par une section de connexion électriquement conductrice commune.

5. Système de gestion de batterie selon l'une des revendications 1 à 4, dans lequel le circuit de mesure (118) est configuré pour mesurer simultanément la première tension de mesure et la deuxième tension de mesure.

6. Système de gestion de batterie selon l'une des revendications 1 à 5, dans lequel le premier circuit de traitement (112) est configuré pour effectuer un autotest du premier signal de déclenchement de surintensité (120) et du deuxième signal de déclenchement de surintensité (122), en déclenchant le circuit de mesure (118) soit pour délivrer en sortie le premier signal de déclenchement de surintensité (120) soit pour délivrer en sortie le deuxième signal de déclenchement de surintensité (122), et en surveillant si le signal respectif de déclenchement de surintensité est reçu.

7. Système de gestion de batterie selon la revendication 6, dans lequel le déclenchement de la sortie du circuit de mesure (118) est effectué par
- manipulation d'une tension d'entrée du circuit de mesure (118) ; et/ou
- manipulation d'une tension de référence du circuit de mesure (118) ; et/ou
- abaissement de la première ou deuxième valeur de surintensité prédéterminée.

8. Système de gestion de batterie selon l'une des revendications 1 à 7, comprenant en outre un deuxième circuit de traitement (138) configuré pour surveiller si le premier signal de déclenchement de surintensité (120) et/ou le deuxième signal de déclenchement de surintensité (122) est délivré en sortie par le circuit de mesure (118), et configuré pour délivre en sortie à l'unité de commande de dispositif de protection contre les surintensités (110) un troisième signal de commande d'interruption (144) et un quatrième signal de commande d'interruption (146), lorsque le premier signal de déclenchement de surintensité (120) et le deuxième signal de déclenchement de surintensité (122) sont délivrés en sortie par le circuit de mesure,
dans lequel l'unité de commande de dispositif de protection contre les surintensités (128) est configuré pour déclencher le dispositif de protection contre les surintensités (110) en réponse à la réception à la fois du troisième signal de commande d'interruption (144) et du quatrième signal de commande d'interruption (146).

9. Système de gestion de batterie selon la revendication 8, dans lequel, lors de l'autotest du premier signal de déclenchement de surintensité (120) ou du deuxième signal de déclenchement de surintensité (122), le premier circuit de traitement (112) surveille si le troisième signal de commande d'interruption (144) ou le quatrième signal de commande d'interruption (146) sont délivrés en sortie par le deuxième circuit de traitement (138), respectivement.

10. Système de gestion de batterie selon l'une des revendications 6 à 9, dans lequel le premier circuit de traitement (112) est configuré pour effectuer l'autotest du premier signal de déclenchement de surintensité (120) et l'autotest du deuxième signal de déclenchement de surintensité (122) successivement l'un à l'autre avec une périodicité prédéfinie.

11. Système de gestion de batterie selon l'une des revendications 1 à 10, comprenant en outre un premier isolateur numérique pour transmettre le premier signal de déclenchement de surintensité (120) du circuit de mesure (118) au premier circuit de traitement (112), et un deuxième isolateur numérique pour transmettre le deuxième signal de déclenchement de surintensité (122) du circuit de mesure (118) au premier circuit de traitement (112).

12. Système de gestion de batterie selon l'une des revendications 1 à 11, dans lequel l'unité de commande de dispositif de protection contre les surintensités (128) est configurée pour surveiller périodiquement qu'une tension d'ouverture appliquée pour déclencher le dispositif de protection contre les surintensités (110) pour interrompre la charge ou la décharge du batterie (102) est au-dessus d'une valeur de tension prédéterminée.

13. Système de gestion de batterie selon la revendication 12, dans lequel l'unité de commande de dispositif de protection contre les surintensités (128) déclenche périodiquement le dispositif de protection contre les surintensités (110) pour interrompre la charge ou la décharge de la batterie pendant une durée prédéterminée, afin de surveiller la tension d'ouverture.

14. Bloc de batterie comprenant,
une batterie (102) et,
le système de gestion de batterie (100) selon l'une des revendications 1 à 13.

15. Procédé de surveillance de surintensité dans un système de gestion de batterie (100), qui comprend une première borne (104) destinée à se connecter électriquement à une borne (105) d'une batterie (102), une deuxième borne (106) destinée à se connecter électriquement à au moins l'un parmi une charge électrique ou un chargeur, et un dispositif de protection contre les surintensités (110) couplé de manière conductrice entre la première borne (104) et la deuxième borne (106), et configuré pour interrompre la charge ou la décharge de la batterie (102), le procédé comprenant les étapes consistant à :
mesurer une première tension de mesure et une deuxième tension de mesure aux bornes d'un capteur de courant (108) couplé de manière conductrice entre la première borne (104) et la deuxième borne (106), dans lequel la première tension de mesure et la deuxième tension de mesure sont proportionnelles à un courant de batterie circulant entre la première borne (104) et la deuxième borne (106),
délivrer en sortie un premier signal de déclenchement de surintensité (120), si la première tension de mesure dépasse une valeur de surintensité prédéterminée pendant un intervalle de temps prédéterminé,
délivrer en sortie un deuxième signal de déclenchement de surintensité (122), si la deuxième tension de mesure dépasse une deuxième valeur de surintensité prédéterminée pendant l'intervalle de temps prédéterminé,
surveiller si le premier signal de déclenchement de surintensité (120) et/ou le deuxième signal de déclenchement de surintensité (122) sont délivrés en sortie, et
commander une unité de commande de dispositif de protection contre les surintensités (128) pour déclencher le dispositif de protection contre les surintensités (110), de manière à interrompre la charge ou la décharge de la batterie (102), sur la base de la détection d'au moins l'un parmi le premier signal de déclenchement de surintensité (120) et le deuxième signal de déclenchement de surintensité (122).
